(19) Europäisches Patentamt European Patent Office Office européen des brevets

(11) **EP 3 364 767 B1**

(12) **EUROPEAN PATENT SPECIFICATION**

(45) Date of publication and mention of the grant of the patent:
**26.02.2020  Bulletin 2020/09**

(21) Application number: **16782233.7**

(22) Date of filing: **18.10.2016**

(51) Int Cl.:
*A23D 7/005* (2006.01)        *A23D 9/007* (2006.01)

(86) International application number:
**PCT/EP2016/074918**

(87) International publication number:
**WO 2017/067899 (27.04.2017 Gazette 2017/17)**

(54) **COMPOSITION COMPRISING AN OIL PHASE**

ZUSAMMENSETZUNG MIT EINER ÖLPHASE

COMPOSITION COMPRENANT UNE PHASE HUILEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **19.10.2015  PCT/EP2015/190392**

(43) Date of publication of application:
**29.08.2018  Bulletin 2018/35**

(73) Proprietors:
• **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**
• **Unilever PLC, a company registered in England and**
  **Wales under company no. 41424**
  **Greater London EC4Y 0DY (GB)**
  Designated Contracting States:
  **CY GB IE MT**

(72) Inventors:
• **VAN DER HIJDEN, Hendrikus, Theodorus, W, M**
  **3133 AT Vlaardingen (NL)**
• **VREEKER, Robert**
  **3133 AT Vlaardingen (NL)**
• **VERBEEK, Jan, Hendrik, T**
  **3133 AT Vlaardingen (NL)**
• **KHALLOUFI, Seddik**
  **3133 AT Vlaardingen (NL)**

(74) Representative: **van den Brom, Coenraad Richard**
  **Unilever Patent Group**
  **Bronland 14**
  **6708 WH Wageningen (NL)**

(56) References cited:
WO-A1-2008/062057    WO-A1-2012/084427
WO-A1-2015/128155    WO-A2-2004/044285
US-A1- 2008 193 590

**Description**

**FIELD OF THE INVENTION**

The present invention relates to a composition comprising an oil phase, in particular to a composition comprising a structured oil phase. The invention also relates to a method for preparing a composition comprising a structured oil phase.

**BACKGROUND TO THE INVENTION**

Compositions comprising an oil phase have many applications For example, there are many food compositions that consist essentially of such oil phases, such as for example many shortening compositions. There are even more food compositions, that have an oil phase in combination with other phases. In either case there is a general desire to control the rheological or textural properties of such compositions by structuring the oil phase. Traditionally compositions such as shortenings, butters, margarines and similar products have been structured by the use of at least a portion of hard fat in the oil phase. However, it is desirable to reduce the amount of hard fat required to structure such oil phases, because hard fat is frequently associated with increased cost, limited natural availability from species that have undesirable environmental impact (such as palm oil), or adverse effects on consumer health.

US 2011/0281015 A1 discloses shortening compositions comprising hard fat, liquid oil and cellulose fibre. However, satisfactory structuring requires relatively high amounts of about 4 wt% or more of the used cellulose fibres, which still need to be combined with appreciable amounts of hard fat. Likewise, US 2013/0202771 A1 discloses fat spreads with an oil and a water phase, in which the oil phase comprises cellulose fibres. The structuring of the example spreads provided in that document also depends on the presence of hard fat (e.g. hydrogenated fats) and relatively high amounts of cellulose fibres.

It is disclosed in US 4,378,381 that cellulose can be shear-treated in aqueous media to yield microfibrillated cellulose, which has the capability of enhancing the homogeneity and stability of a wide variety of suspensions. However, due to the hydrophilicity of the cellulose fibres, the use of the microfibrillated cellulose is generally considered to be limited to aqueous phases. For example, EP 0 533 147 A1 discloses how microfibrillated cellulose can be used to increase the water retention of a margarine composition, by simultaneously adding (aqueous) microfibrillated cellulose and the liquid that forms the aqueous phase to a fat and/or oil component.

WO 201 5/1 281 55 A1 relates to a preparation of plant parenchymal cell wall clusters.

WO 2004/044285 A2 relates to a highly refined cellulose product comprising microfibres, having a water retention capacity of at least about 20 g $H_2O$ per gram of dry product.

WO 2008/062057 A1 relates to a composition comprising citrus fibre having a water binding capacity of from 7 to 25 (w/w) and native starch.

US 2008/193590 A1 relates to an edible food product comprising highly refined cellulose.

WO 02/18486 discloses a way in which "high surface area cellulose" can be used for the rheological modification of water-immiscible liquids, such as oils. The high surface area cellulose can be bacterial cellulose, or plant-derived cellulose of which the surface area is increased, e.g. by activation using high pressure homogenisation. In order to make the high surface area cellulose suitable for use in oils, surfactants such as dodecylamine and fatty acid derivatives and/or polymers such as poly(vinyl pyrrolidone) graft hexadecene are combined with the aqueous cellulose. However, large amounts of typically about twice the weight of the cellulose of these surfactants and/or polymers appear to be required to make them dispersible in oil. Such amounts and types of surfactants/polymers are undesirable in many applications, especially in food applications.

Therefore, it is an object of the present invention to provide a composition that overcomes one or more of the problems observed in the prior art as described above.

It is an object of the present invention to provide alternative ways of modifying the rheology and/or structuring oil phases.

It is a particular object of the present invention to provide structuring or rheological modification to oil phases whilst reducing the need to use hardstock fat or other undesirable rheology modifiers or additives.

It is another object of the present invention to provide compositions comprising an oil phase with improved structuring, whilst such compositions comprise relatively less hardstock fat.

It is another object of the present invention to provide a method for preparing compositions comprising a structured oil phase, wherein the oil phase has controllable rheological properties.

It is a particular object of the present invention to provide a method for preparing a composition comprising a structured oil phase, with a reduced amount of hardstock fat, but with equal or even improved structuring.

## DEFINITION OF THE INVENTION

We have surprisingly found that one or more of these objects can be achieved by the present invention. In particular, we found that fibrous preparations of delaminated plant cell wall material and hardstock fat can be used synergistically to structure an oil phase, provided that the fibrous preparation has sufficient openness and/or has a sufficiently large specific surface area. We found that such structuring is effectively achieved at surprisingly low concentrations of both fibrous material and hardstock fat with regard to the total oil phase. This synergistic interaction is unexpected in view of the generally hydrophilic nature of activated plant cell wall material.

The properties of the fibrous preparation required to structure an oil composition in combination with a hardstock fat can be expressed in terms of its specific surface area. Accordingly, in a first aspect the invention provides a composition comprising a structured oil phase, wherein the oil phase comprises

    a. liquid oil
    b. hardstock fat; and
    c. a fibrous preparation of delaminated cell wall material dispersed in said oil phase, wherein the cell wall material is sourced from plant tissue,

and wherein said fibrous preparation has a specific surface area corresponding to an $S_{BET}$ of at least 5 m$^2$/g.

According to a second aspect of the invention, there is provided a method for preparing a composition comprising a structured oil phase, wherein the method comprises the steps of

    a. providing cell wall material, wherein the cell wall material is sourced from plant tissue;
    b. providing at least part of the oil phase;
    c. providing the hardstock fat;
    d. delaminating said cell wall material in an aqueous medium;
    e. drying the dispersed delaminated cell wall material so as to obtain a dried fibrous preparation of delaminated cell wall material with an $S_{BET}$ of at least 5 m$^2$/g; and
    f. preparing a molten mixture of the hardstock fat and the at least first part of the liquid oil;
    g. dispersing the dried preparation in said molten mixture;
    h. crystallising the hardstock fat in the mixture comprising the dispersed fibrous preparation.

Consequently, according to a third aspect, the invention provides a composition according to the first aspect obtainable by the method according to the second aspect of the invention.

According to a fourth aspect, the invention also provides use of a synergistic combination of hardstock fat and a fibrous preparation of delaminated cell wall material to structure the oil phase of a composition comprising an oil phase,

-   wherein the cell wall material is sourced from plant tissue,
-   and wherein said fibrous preparation has a specific surface area corresponding to an $S_{BET}$ of at least 5 m$^2$/g.

## DETAILED DESCRIPTION OF THE INVENTION

Any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Moreover, weight percentage (wt. %) is based on the total weight of the product unless otherwise stated. Except in the operating and comparative examples, or where otherwise explicitly indicated, all numbers in this description indicating amounts of material or conditions of reaction, physical properties of materials and/or use are to be understood as modified by the word "about". Unless specified otherwise, numerical ranges expressed in the format "from x to y" are understood to include x and y. When for a specific feature multiple preferred ranges are described in the format "from x to y", it is understood that all ranges combining the different endpoints are also contemplated. For the purpose of the invention ambient temperature is defined as a temperature of about 20 degrees Celsius.

In the context of this description the terms 'fat' and 'oil' are used interchangeably unless specified otherwise. Where applicable the prefix 'liquid' or 'solid' is added to indicate if the fat or oil is liquid or solid at ambient temperature as understood by the person skilled in the art. The term 'hardstock' refers to a fat that is solid at ambient temperature.

*Composition comprising an oil phase*

The present invention relates to a composition comprising an oil phase. In the context of the present invention, an oil phase is understood to be a phase whose principal components are hydrophobic substances of which typically a part is liquid at room temperature. For the avoidance of doubt, the below explanation, exemplification and preferences regarding oil compositions applies to the oil composition in any aspect of the present invention. Structuring and or rheological modification is particularly desirable for oil phases which - without the presence of a structurant such as for example hardstock fat and/or the fibrous preparations of the present invention - would have been liquid at the temperature at which they are used. Thus, the oil phase comprises a liquid oil. The liquid oil preferably includes an edible liquid oil, a liquid paraffin, a liquid silicone oil or a combination thereof.

The composition of the invention preferably is an edible composition. The oil phase therefore preferably is an edible oil phase. Consequently, the liquid oil and hardstock fat preferably consist of edible oils and fats.

Thus, the liquid oil preferably is an edible triglyceride-based oil as understood by the person skilled in the art. Likewise, the hardstock fat preferably is an edible triglyceride-based fat. The terms 'triacylglycerols', 'TAGs', and 'triglycerides' are used interchangeably; they refer to esters of glycerol and three fatty acids. The fatty acid (moieties) of the TAGs may vary in length. The length of a fatty acid is commonly indicated by their carbon number. The fatty acid (moieties) may be saturated, monounsaturated or polyunsaturated. Examples of sources of conventional edible oils and fats include coconut oil, palm oil (and fractions thereof including palm olein and palm stearin), palm kernel oil, marine oils (including fish oil), lard, tallow fat, butter fat, soybean oil, safflower oil, cotton seed oil, rapeseed oil, linseed oil, sesame oil, poppy seed oil, corn oil (maize oil), sunflower oil, peanut oil, rice bran oil, olive oil, algae oil, shea fat, and alanblackia and blends thereof. For the purpose of this invention, algae oils are considered vegetable oils.

Preferably at least 50 wt% of the liquid oil (based on total amount of liquid oil) is of vegetable origin, more preferably at least 60 wt%, even more preferably at least 70 wt%, still more preferably at least 80 wt%, even still more preferably at least 90 wt% and even still more further preferably at least 95 wt%. Most preferably the liquid oil essentially consists of oil of vegetable origin. Preferably the liquid oil is selected from soybean oil, sunflower oil, rape seed (canola) oil, cotton seed oil, peanut oil, rice bran oil, safflower oil, palm olein, linseed oil, fish oil, high omega-3 oil derived from algae, corn oil (maize oil), sesame oil, palm kernel oil, coconut oil, olive oil, and combinations thereof. More preferably the liquid oil is selected from soybean oil, sunflower oil, rape seed oil, corn oil (maize oil), olive oil, linseed oil, palm olein and combinations thereof.

Alternatively, it may also be preferred that the liquid oil is an edible diglyceride-based oil, or it is an oil based on a mixture of edible triglycerides and edible diglycerides. The present invention is not limited to edible compositions. In particular in the context of personal care compositions, the oil phase may also include one or more paraffins, or silicone oils.

The oil phase of the composition according to the present invention preferably comprises at least 1wt%, more preferably at least 10 wt%, still more preferably at least 50 wt%, yet more preferably at least 80 wt%, still more preferably at least 85 wt% and even still more preferably at least 90 wt% of liquid oil with respect to the weight of the oil phase. In some applications, it is even preferred that at least 95 wt% or more preferably at least 98 wt% of liquid oil with respect to the weight of the oil phase. Thus, the oil phase preferably comprises between 1 and 99 wt-%, more preferably between 10 and 98 wt-%, even more preferably between 50 and 95 wt-% and still more preferably between 80 and 98.0 wt-% of liquid oil with respect to the weight of the oil phase.

*Hardstock fat*

The hardstock fat in the oil phase can be any hardstock fat that is suitable to structure oil phases. Suitable hardstock fats are well known to the skilled person. Such hardstock fats may for example include vegetable fats, animal fats, and the like. The hardstock fat preferably is edible.

Vegetable fats are preferred over animal fats because their unsaturated fat composition enhances the spread's nutritional value. Besides that, vegetable fats are a relatively cheap resource. However, natural, non-processed vegetable fats which have hardstock functionality are rare. Natural fats in the context of this specification are fats which as such are present in their non-genetically modified source organism, particularly in the seeds or fruits of particular plants. For acting as hardstock fat such non-processed vegetable fats usually lack the necessary high content of saturated fatty acids with a chain length of at least 16 carbon atoms. Shea fat, cocoa butter and palm oil are a few examples of fats containing a substantial amount of saturated fatty acid.

Fractionation, hydrogenating and interesterification are well known techniques for turning vegetable oils into suitable hardstock fats. The present trend in food processing, however, is to avoid processing, as much as possible and to opt for natural ingredients and natural processing. Natural processing means that the ingredients have a natural origin and after harvesting have been subjected to no other treatment than a refining and/or purification treatment and to no modification treatment whatsoever.

More natural processing appeals to manufacturers, as it may lower the cost of the production process and the required number of processing steps.

Therefore, it is preferred that the hardstock fat is obtained from palm oil, cocoa butter, coconut oil, shea fat, allanblackia fat or high stearic sunflower oil, or blends thereof. More preferably the hardstock fat is obtained from coconut, shea, alanblackia, high stearic sunflower oil or blends thereof.

Trans unsaturated fatty acids are known to have a good structuring capacity but are not preferred as they are associated with cardiovascular disease. Therefore, preferably the fat phase comprises less than 5 wt%, more preferably less than 3 wt% and even more preferably less than 1 wt% trans unsaturated fatty acid. Trans unsaturated fatty acids are naturally present mainly in fats of animal origin like for example butter fat and butter oil. Partial hydrogenation of liquid vegetable oils may also lead to the presence of trans unsaturated fatty acids. Therefore, the fat blend preferably does not contain partially hydrogenated fats.

To maintain a healthy composition the oil phase preferably comprises less than 30 wt% saturated fatty acids and preferably less than 20 wt%, like for example 10 to 35 wt%, 15 to 35 wt% or 15 to 30 wt%. Preferably the fat phase comprises at least 40 wt% of poly unsaturated fatty acids.

The liquid oil may be a single oil or a mixture of two or more oils. Likewise the hardstock fat may be a single fat or a mixture of two or more fats. The liquid oil and hardstock fat may be of vegetable, dairy (e.g. dairy fat or butter oil) or marine (e.g. algae oil or fish oil) origin.

Preferably at least 50 wt% of the hardstock fat (based on total amount of structuring fat) is of vegetable origin, more preferably at least 60 wt%, even more preferably at least 70 wt%, still more preferably at least 80 wt%, even still more preferably at least 90 wt% and even still more further preferably at least 95 wt%. Most preferably the hardstock fat essentially consists of fat of vegetable origin.

Preferably at least 50 wt% of the combined amount of liquid oil and hardstock fat total fat blend is of vegetable origin, more preferably at least 60 wt%, even more preferably at least 70 wt%, still more preferably at least 80 wt%, even still more preferably at least 90 wt% and even still more further preferably at least 95 wt%. Most preferably the combined amount of liquid oil and hardstock fat essentially consists of fat of vegetable origin.

The oil phase of the composition according to the present invention preferably comprises at least 1wt%, more preferably at least 10 wt%, still more preferably at least 50 wt%, yet more preferably at least 80 wt%, still more preferably at least 85 wt% and even still more preferably at least 90 wt% of liquid oil with respect to the weight of the oil phase. In some applications, it is even preferred that at least 95 wt% or more preferably at least 98 wt% of liquid oil with respect to the weight of the oil phase. Thus, the oil phase preferably comprises between 1 and 99 wt-%, more preferably between 10 and 98 wt-%, even more preferably between 50 and 95 wt-% and still more preferably between 80 and 98.0 wt-% of liquid oil with respect to the weight of the oil phase.

The oil phase preferably comprises from **1 to 20** wt-% of hardstock fat with regard to the weight of the oil phase. More preferably, the oil phase comprises between **2 wt% and 18 wt%,** even more preferably between **3 wt% and 16 wt%,** more preferably between **5 wt% and 14 wt%** and even more preferably between **8 wt% and 12 wt%** of hardstock fat with respect to the weight of the oil phase.

*Cell wall material*

The present invention involves a fibrous preparation of delaminated cell wall material, wherein the cell wall material is sourced from plant tissue.

Thus, the main component of the fibrous preparation is cell wall material.

For the purpose of the invention "cell wall material" is defined as the cell wall material from which essentially all cold water soluble components have been removed, i.e. at a temperature of around 20 degrees Celsius. This can easily be achieved by washing with water.

The cell wall material is sourced from plant tissue. Plant tissue may contain primary cell wall material and/or secondary cell wall material, depending on the type of plant and the type of tissue of a certain plant species. Both primary and secondary cell wall material generally comprise microfibrils. Therefore, the cell wall material may be primary cell wall material, secondary cell wall material or a combination thereof. The cell wall material preferably comprises microfibrils.

Preferably, the cell wall material is primary cell wall material, because - generally - for primary cell wall material less shear is required to arrive at the state of delamination and/or defibrillation that provides the fibrous preparation with its beneficial properties. Therefore, the fibrous preparation of the present invention preferably is a fibrous preparation of primary cell wall material, wherein the primary cell wall material is sourced from plant parenchymal tissue.

Such primary cell wall material is sourced (i.e. prepared) from plant parenchymal tissue. The source of the plant parenchyma cells may be any plant that contains plant parenchyma cells having a cellulose skeleton. A plant cell wall typically contains cellulose and hemicellulose, pectin and in many cases lignin. This contrasts with the cell walls of fungi (which are made of chitin), and of bacteria, which are made of peptidoglycan. Primary plant cell walls contain lignin only in minor amounts, if at all. The primary cell wall material used in the composition according to the invention may comprise some lignin, like less than 10 wt%, more preferably less than 2 wt% calculated on total amount of cell wall material, but preferably does not contain substantial amounts of lignified tissue. Preferably the primary cell wall material consists essentially of non-lignified tissue as understood by the skilled person in the area of plant biology.

Preferably the source of cell wall material is selected from parenchymal tissue from fruits, roots, bulbs, tubers, seeds, leaves and combination thereof; more preferably is selected from citrus fruit, tomato fruit, peach fruit, pumpkin fruit, kiwi fruit, apple fruit, mango fruit, sugar beet, beet root, turnip, parsnip, maize, oat, wheat, peas and combinations thereof. Even more preferably, the source of cell wall material is selected from citrus fruit, sugar beet, sugar cane, tomato fruit and combinations thereof. A most preferred source of cell wall material is parenchymal tissue from citrus fruit. Consequently, it is preferred that the cell wall material is citrus fibre, tomato fibre, sugar beet fibre, sugar cane fibre or a combination thereof and even more preferably the cell wall material is citrus fibre.

The cell wall material may optionally have undergone several pre-treatment steps before it is brought in any activated or defibrillated state. Such pre-treatments include but are not limited to heating, cooking, washing, refining, depectinating.

The fibrous preparation of cell wall material preferably comprises at least 70 wt-% of cell wall material, more preferably at least 80 wt-% and even more preferably at least 90 wt-% with respect to the weight of the fibrous preparation. Here, the wt-% of the fibrous preparation is based on the dry weight of the cell wall material from which essentially all cold water soluble components have been removed (i.e. the insoluble fraction, which is also understood as the fibre fraction). The preparation may also comprise some water, typically residual water. Consequently, it is preferred that the fibrous preparation essentially consists of cell wall material and water.

*Microfibrils*

In the context of the present invention, the microfibrils present in or derived from the cell wall material, are the strongly self-associated fibrous structures typically found in plant cell walls. In the native plant tissue, they are conventionally present in the form of aggregates from a few tens of nanometres to a few micrometres in diameter. These aggregates include elementary fibrils of typically about 3.5 nm in diameter as described by Chinga-Carrasco et al (Nanoscale Research Letters 2011, 6:417). Microfibrils as found in the native plant tissue generally comprise cellulose as their key constituent. In addition, the microfibrils may also include other polysaccharides such as pectin and hemicellulose. It is believed that the beneficial properties of the fibrous preparation used in the present invention relate to the structure and rigidity of the cell wall material, due to the typical presence of microfibrils in the cell wall material.

Preferably, the cell wall material as used in the fibrous preparation is obtained from the the plant tissue by removing soluble and unbound sugars, protein, polysaccharides, oil soluble oils, waxes and phytochemicals (e.g. carotenoids, lycopene). This is suitably achieved using well known techniques including cutting up the cell wall material, heating, washing, centrifugation, decanting and drying as is well-known to the skilled person.

Preferably the cell wall material comprises at least 50 wt-% of microfibrils, more preferably at least 60 wt %, even more preferably at least 70 wt %, still more preferably at least 80 wt %, even still more preferably at least 90 wt % and most preferably the cell wall material consists essentially of microfibrils. Here, the wt-% is based on the dry weight of the cell wall material and the microfibrils.

Plant cell walls, especially in parenchymal tissue contain hemicelluloses and pectin in addition to cellulose. Thus, the microfibrils in the cell wall material may typically comprise cellulose, hemicellulose, and pectin. However, the cell wall material of the invention does not necessarily contain hemicellulose and/or pectin. The hemicellulose or part thereof may have been removed when the cell wall material is prepared from the plant parenchymal tissue. Therefore, the cell wall material of the invention optionally comprises hemicellulose, like for example in an amount of 0 to 40 wt%. Preferably the cell wall material comprises hemicelluloses, preferably in an amount of up to 40 wt%, like for example from 5 to 40 wt%, and more preferably in an amount from 10 to 30 wt%.

Likewise the pectin or part thereof may have been removed when the cell wall material is primary cell wall material prepared from the plant parenchymal tissue. Therefore, the cell wall material of the invention optionally comprises pectin, like for example in an amount of 0 to 35 wt%. Preferably the cell wall material comprises pectin, preferably in an amount of up to 30 wt%, like for example from 5 to 30 wt%, and more preferably in an amount from 10 to 20 wt%.

Preferably the cell wall material of the invention comprises hemicelluloses and pectin.

In general, if cell wall material is subjected to shear forces, this leads to structural changes. The more shear energy is applied, the more the cell wall structure is taken apart. The cell wall material in the preparation of the invention comprises cell wall material that is at least delaminated, that is, sufficient shear has been supplied to decompose the cell wall, as understood by the skilled person. If the cell wall material is subjected to more shear energy, this results in defibrillation, i.e. a stage at which the microfibrils that make up the fibres present in the cell wall are at least partially disentangled without breaking them. Delamination is one of the factors that affects the openness (and consequently the $S_{BET}$) of the fibrous preparation as it is used in the present invention. Without wishing to be bound by theory, it is believed that the higher the degree of delamination or defibrillation, the higher the $S_{BET}$ is that can be obtained for a fibrous preparation. In order to realise a weight-effective porous network-like structure that maintains its porosity, it is desirable that the microfibrils are separated/disentangled such that they yield relatively long yet relatively thin fibrils. Therefore, the fibrous preparation of the invention preferably is a fibrous preparation of defibrillated cell wall material. Thus, the cell wall material is preferably not only delaminated but also defibrillated.

Preferably the average length of the microfibrils in the defibrillated cell wall material is therefore more than 1 micrometer and preferably more than 5 micrometers.

Preferably, at least 80 wt% of the microfibrils is smaller than 50 nm in diameter. More preferably at least 80 wt% of the microfibrils is smaller than 40 nm in diameter, even more preferably smaller than 30 nm, even more preferably smaller than 20 nm and still more preferably smaller than 10 nm. The microfibril diameter can be suitably determined using the method described WO 2014/095323 A1.

The cell wall material is suitably defibrillated by subjecting it to mechanical energy and/or cavitation thereby disentangling the cellulose microfibrils in an aqueous medium as known by the skilled person. This can be done as part of the process for obtaining the microfibrils from the cell wall material, thus resulting in isolated defibrillated cell wall material comprising microfibrils. The required level of defibrillation can also be arrived at by a succession of various such disentanglement treatments, for example by first subjecting a dispersion of the cell wall material to a high shear treatment, and at later stage subjecting the resulting dispersion to another high shear treatment, possibly involving additional washing or similar treatment steps in between.

The cellulose in primary cell wall material generally has a lower degree of crystallinity. Therefore, the cellulose in the microfibrils in the defibrillated cell wall material in any of the compositions of the present invention preferably has an average degree of crystallinity of less than 50%. Preferably the average degree of crystallinity of the cellulose in the microfibrils is less than 40%, more preferably less than 35% and even more preferably less than 30%. The table below shows the average degree of crystallinity of typical sources of cellulose microfibrils. It shows that the cellulose in primary cell wall material sourced from plant parenchymal tissue typically has a degree of crystallinity of less than 50 wt-%.

**Table 1:** Average degree of crystallinity of cellulose (all polymorph cellulose I)

| Source | Average degree of crystallinity (%) |
|---|---|
| Tomato fibers | 32 |
| Citrus fiber (Citrus Fiber AQ+N) | 29 |
| Nata de Coco | 74 |
| Cotton | 72 |
| Wood pulp fiber (Meadwestvaco) | 61 |
| Sugar beet fibre (Nordix Fibrex) | 21 |
| Pea fibres (PF200vitacel) | 42 |
| Oat fibres (780 Sunopta) | 43 |
| Corn hull (Z-trim) | 48 |
| Sugar cane Fiber (Ultracel) | 49 |

The average degree of crystallinity can be suitably determined according to the method described in WO 2014/095323 A1.

Surprisingly, the cell wall material of the present invention could be made suitable for use in oil phases. No chemical treatment (such as hydrophobisation, or similar funtionalisation or likewise derivatisation) is required. Therefore the microfibrils in the cell wall material preferably have not undergone any chemical treatment.

*Fibrous preparation*

The fibrous preparation is suitably characterised by its specific surface area, because the favourable properties provided to the composition of the invention by the fibrous preparation relate to its openness and therefore its specific surface area. The specific surface area can suitably be quantified by the related property $S_{BET}$ as explained below. Accordingly, the fibrous preparation of the composition as used in the present invention has a specific surface area corresponding to an $S_{BET}$ of at least 5 $m^2/g$. The $S_{BET}$ is determined using the method described herein below. $S_{BET}$ is expressed in square metres per gram of material. As explained in the description of the method below, $S_{BET}$ is the specific surface area as determined from adsorption/desorption isotherms, based on the Brunauer-Emmet-Teller theory

and using nitrogen ($N_2$) as the sample gas. For practical reasons, the $S_{BET}$ of the fibrous preparation is determined for the isolated fibrous preparation, i.e. typically before it is contacted with the other constituents of the oil phase it is dispersed in. It is believed that contacting the fibrous preparation with the liquid oil affects the specific surface area of the fibrous preparation only to a limited extent if at all. Therefore $S_{BET}$ is suitable to characterise the fibrous preparation even after it has been contacted with the remainder of the oil phase.

The higher the specific surface area, the better the structuring is. Therefore, the fibrous preparation preferably has a specific surface area corresponding to an $S_{BET}$ of at least 6, more preferably at least 10, even more preferably at least 15, and still more preferably at least 18 $m^2/g$. Thus, the fibrous preparation preferably has a specific surface area corresponding to an $S_{BET}$ of between 5 and 40 $m^2/g$, more preferably between 10 and 35 $m^2/g$ and even more preferably between 15 and 30 $m^2/g$.

During manufacture of the composition according to any aspect of the invention the fibrous preparation is contacted with at least part of the oil phase in order to disperse it in that phase. At that stage, the fibrous preparation that is used in the present invention should be dried, because in contrast to cell wall material which is wet (with water), a dried fibrous preparation of the material is readily dispersed when it is contacted with oil that is liquid. This also holds true for a molten mixture of hardstock fat and liquid oil. Therefore, the fibrous preparation preferably has a water content of at most 20 wt%, more preferably at most 10 wt% and even more preferably at most 5 wt% relative to the weight of the preparation, at least at the stage at which the fibrous preparation is contacted with the oil phase. The water content is determined by the method as described below. In general, the fibrous preparation may be dried using any suitable technique, as long as the required openness is obtained. It is believed that during proper drying - especially in case the cell wall material had been defibrillated to a large extent - the individual microfibrils may agglomerate, at least to some extent, into larger structures, but these structures maintain a sufficient degree of openness, as suitably characterised by the $S_{BET}$.

The degree of openness of the fibrous preparation may be further described by the Microfibril Availability Parameter (MAP), which is an NMR-based measure of the degree of delamination/defibrillation of the fibrous preparation as explained herein below. The fibrous preparation preferably has a Microfibril Availability Parameter (MAP) of at least 1.0 Hz, more preferably at least 1.10 Hz, even more preferably at least 1.20 Hz, still more preferably at least 1.30 Hz and yet more preferably at least 1.35 Hz, especially when the fibrous preparation is based on citrus fibre material.

A suitable way of preparing the fibrous preparation involves delaminating or defibrillating the cell wall material in an aqueous medium as explained above. Delamination, and to a larger extent defibrillation leads to an aqueous dispersion of the cell wall material, in which the disentangled microfibrils are distributed in the aqueous phase forming a relatively open network structure. It was found that it is possible to prepare a fibrous preparation of cell wall material that is suitable for use in the composition of the invention, if such a dispersion of delaminated cell wall material is dried but retains the openness of said material in the aqueous defibrillation medium. This can be arrived at by various drying techniques known to the skilled person. A typical, but non-limiting example is rapid freezing followed by freeze-drying. Here, the dispersion is rapidly frozen first, preferably at such a rate of freezing that upon freezing the ice crystals remain small enough so as to not appreciably collapse the fibre dispersion. Next, the frozen material is freeze dried. By sublimation of the ice, the collapsing effect of capillary forces between the microfibrils in an evaporating liquid medium is avoided.

We found that by delaminating cell wall material (for instance by subjecting it to shear forces) in aqueous medium, its available surface area in the medium can be increased to reach the required level of openness. The delaminated cell wall material can surprisingly be used in an oil phase if it is properly dried. Therefore, the invention provides a composition comprising a structured oil phase, wherein the oil phases comprises liquid oil, hardstock fat; and a fibrous preparation of delaminated cell wall material dispersed in said oil phase, wherein the cell wall material is sourced from plant tissue; and wherein said fibrous preparation is a dried preparation of delaminated plant cell wall material retaining the openness of said material in the aqueous delamination medium.

Other methods of drying that yields a preparation of cell wall material of sufficient porosity are contemplated too. These methods include for example the method disclosed in US 2012/0090192.

The fibrous preparation used in the present invention preferably is in particulate form.

The particulate form may be a direct result of the manufacturing method used to obtain the fibrous preparation, or it may be realised or modified by a size reduction treatment, including for example grinding. Therefore, the fibrous preparation preferably is ground.

The fibrous preparation may be ground before it is contacted with the oil phase.

Alternatively, or even additionally, a size reduction step may also be carried out after a the fibrous preparation was dispersed (at a relatively course size) in at least part of the oil phase.

The particle size of the fibrous preparation in dry form is generally hard to determine, in view of the fluffy nature of such material. However, if the fibrous preparation is dispersed in a hydrophobic liquid, it may readily be analysed by sieving and the weight fractions of different sizes may be determined by use of consecutive sieves of varying mesh size. Thus, it is particularly preferred that the fibrous preparation is in particulate form wherein upon sieving a dispersion containing between 0.05 and 0.2 wt-% of the fibrous preparation in a hydrophobic liquid, at least 70 wt% of the fibrous preparation passes a sieve with apertures of 500 μm and not more than 30 wt% of the fibrous preparation passes a sieve with apertures of 125 μm.

During the sieving, the hydrophobic liquid preferably is a triglyceride oil, more preferably it is sunflower oil.

Preferably, at least 80 wt% of the fibrous preparation passes a sieve with apertures of 500 μm and not more than 20 wt% of the fibrous preparation passes a sieve with apertures of 125 μm.

The oil phase of the composition of the invention preferably comprises from **0.1** to **10** wt-%, more preferably between 0.2 and 5 wt%, even more preferably between 0.3 and 3 wt%, still more preferably between 0.4 and 2 wt% and even still more preferably between 0.5 and 1.5 wt% of said fibrous preparation with respect to the weight of the oil phase.

*Combining fibrous preparation and hardstock fat*

According to the invention, a combination of hardstock fat and fibrous preparation is surprisingly used to modify the rheological properties of an oil phase, such that the oil phase of the composition according to the invention is a structured oil phase. It is clear to the skilled person that the amount of the fibrous preparation and the amount of hardstock fat that are used in the oil phase depend on the particular application and the desirable extent of rheological modification or structuring. A composition may also comprise other components which contribute to the overall rheological properties and/or structuring.

Without wishing to be bound by theory, it is believed that the enhanced structuring capability of the fibrous preparation in combination with the hardstock fat is due to their capacity to build a space-filling (percolating) network of cell wall material and hardstock fat with a large degree of openness within the oil phase. Thus, the combination of fibrous preparation and hardstock fat also plays an important role in imparting structural characteristics such as a semi-solid, plastic or spreadable consistency. Surprisingly, the fibrous material, which - in principle - is hydrophilic in nature does not precipitate, aggregate, flocculate or collapse in the hydrophobic oil phase and even more surprisingly, the fibrous preparation and the hardstock fat interact synergistically to yield very efficient structuring of the oil phase. Therefore, the oil phase preferably comprises a synergistic combination of the hardstock fat and the fibrous preparation.

In such a synergistic combination the hardstock and the fibrous preparation are present in respective amounts that yield a synergistic structuring effect. The exact amounts depend on the type and amount of liquid oil, the type of hardstock fat and the type of fibrous preparation (depending for instance on the $S_{BET}$ of the fibrous preparation). Besides, with higher amounts of fibrous preparation, relatively less hardstock will be required and vice versa.

In view of the favourable interaction, it is preferred that during preparation of the composition of the invention, the hardstock fat is crystallised in the presence of the dispersed fibrous preparation.

In general, it is preferred that the oil phase of the composition according to the invention comprises from **1 to 20** wt-% of said hardstock fat and from **0.1** to **10** wt-% of the fibrous preparation with regard to the weight of the oil phase.

More preferably, the oil phase of the composition according to the invention comprises from **2 to 15** wt-% of said hardstock fat and from **0.2 to 5** wt-% of the fibrous preparation with regard to the weight of the oil phase.

The ratio of hardstock fat to fibrous preparation may also affect the structuring they impart to the oil phse. Therefore, the hard stock fat and the fibrous preparation are preferably present in a ratio by weight of fibrous preparation to hardstock fat of between 1 to 40 and 1 to 1. More preferably, they are present in a ratio by weight of hardstock fat to fibrous preparation of between 1 to 20 and 1 to 2, and even more preferably of between 1 to 10 and 1 to 5.

Alternatively, the oil phase preferably comprises the fibrous preparation and the hardstock fat in amounts in which their combination provides the composition with a shear storage modulus G' of at least 100 Pa, more preferably at least 500 Pa, even more preferably at least 1000 Pa and still more preferably at least 1500 Pa. Here, both the possibility that substantially only the combined fibrous preparation and hardstock fat contribute to the G' of the composition and the possibility that other components of the composition also make a contribution to the G' of the composition are envisaged.

It was surprisingly found that the combined effect of the fibrous preparation and the hardstock fat can render the composition of the invention non-flowable. Thus, the composition preferably is a non-flowable composition. A composition is considered non-flowable if a sample of the composition is placed in a jar and no flow is observed upon turning the jar upside down.

The benefits of structuring the oil phase of the composition according to the present invention may advantageously also be exploited to structure or rheologically modify the oil phase of compositions that also comprise optional additional components or additional phases. However, the composition may also be a composition which essentially consists of the oil phase with the fibrous preparation dispersed therein. Thus, it is preferred that the composition comprises at least 5wt%, more preferably at least 10wt%, even more preferably at least 50 wt%, even more preferably at least 70 wt-%, even more preferably at least 80 wt% and still more preferably at least 90 wt% of the oil phase with respect to the weight of the composition.

Thus, it is preferred that the composition according to the invention is an edible composition comprising a structured oil phase in an amount of at least 80 % by weight of the total composition, wherein the oil phase comprises between 1 and 20 wt% of hardstock fat with regard to the weight of the oil phase, and wherein the oil phase also comprises the fibrous preparation of primary cell wall material in an amount of between 0.1 and 4 % by weight of the oil phase, wherein the fibrous preparation is dispersed in said oil phase, wherein the primary cell wall material is citrus fibre, tomato fibre, sugar cane fibre, sugar beet fibre or a combination thereof and wherein said fibrous preparation has a specific surface area corresponding to an $S_{BET}$ of at least 5 m$^2$/g, preferably at least 10 m$^2$/g and even more preferably at least 15 m$^2$/g.

*Method*

According to the second aspect, the present invention also provides a method for the preparation of a composition comprising a structured oil phase, wherein the method comprises the steps as specified hereinabove. The method preferably is a method for the preparation of a composition according to the invention. Therefore, the examples and preferences with regard to the cell wall material, the fibrous preparation, the oil phase, the liquid oil, the hardstock fat and any of the other components of the composition according to the invention also apply with regard to this method and the composition prepared by it.

Step d of the process involves at least delaminating said cell wall material in an aqueous medium. This treatment involves subjecting the cell wall material to mechanical shearing and/or cavitation. To this effect, the treatment may include a shear mixing step, such as treatment with a Silverson overhead mixer or inline mixer. At higher shear, the delaminated material can also become defibrillated material. It is preferred that the delaminated cell wall material is defibrillated. Therefore, the treatment preferably includes a high shear treatment step selected from high pressure homogenisation at a pressure of between 500 and 2000 bar and microfluidising at a pressure of between 500 and 2000 bar. These treatments are favourably combined with a shear mixing pre-treatment, for example with a mixer like a Silverson mixer. Both high pressure homogenisation and microfluidisation are well-known techniques, involving well-known equipment. Preferably, the high shear treatment step is high pressure homogenisation as specified, more preferably, it is high pressure homogenisation at a pressure of between 500 and 1000 bar, and even more preferably at a pressure of between 600 and 800 bar. Thus, it is especially preferred that the aqueous medium of step c. comprises between 0.5 and 4 wt-% of the cell wall material and the high shear treatment step of step iii is high pressure homogenisation at a pressure of between 600 and 800 bar.

The precise pressure and the number of passes and/or stages of the treatment - be it shear mixing, high pressure homogenisation or microfluidisation - that is required to obtain the benefits of the present invention may depend for instance on the concentration of the cell wall material present and on its level of comminution/pre-treatment before this step, but is easily determined by experimentation.

Step e involves drying the dispersed defibrillated cell wall material so as to obtain a dried fibrous preparation of cell wall material. As explained above, the fibrous preparation is suitably characterised by its $S_{BET}$. The dried fibrous preparation preferably has an $S_{BET}$ of at least 5 m$^2$/g, more preferably at least 6, more preferably at least 10, even more preferably at least 15, and still more preferably at least 18 m$^2$/g. The dried fibrous preparation preferably has an $S_{BET}$ of between 5 and 40 m$^2$/g, more preferably between 10 and 35 m$^2$/g and even more preferably between 15 and 30 m$^2$/g.

In order to arrive at the desired openness, the drying method suitably includes a freezing step, which is sufficiently rapid to suppress the growth of water ice crystals that would lead to at least partial collapse of the structure of the delaminated cell wall material in the dispersion medium. Subsequently, the drying typically involves removal of the dispersion medium still whilst avoiding collapse of the defibrillated cell wall material.

The fibrous preparation in step d should be dried. Therefore, the dried fibrous preparation preferably has a water content of at most 20 wt%, more preferably at most 10 wt% and even more preferably at most 5 wt% relative to the weight of the preparation, at the stage at which the fibrous preparation is contacted with the oil phase.

Step f involves preparing a molten mixture of the hardstock fat and the at least first part of the liquid oil. Such a molten mixture is typically prepared by heating in any suitable way. The hardstock fat may for example be individually heated until molten, or the hardstock fat and liquid oil may for instance first be combined and then heated.

Step g involves dispersing the dried preparation in said molten mixture. Typically, such dispersion involves only very little agitation, mild agitation, mild shear. Under many practical conditions, mild stirring suffices to generate structured structure upon combining the fibrous preparation and the oil phase.

The fibrous preparation may be ground before it is dispersed in the molten mixture. Alternatively, or additionally, a size reduction step may also be carried out after the fibrous preparation was dispersed (at a relatively course size) in the molten mixture.

Step h involves crystallising the hardstock fat in the mixture comprising the dispersed fibrous preparation. In this step the structuring network of fibrous preparation and hardstock crystals is typically formed. Such crystallisation is usually conducted in a process that involves apparatus that allow heating, cooling and mechanical working of the ingredients, such as the churn process or the votator process. The churn process and the votator process are described in the Ullmans Encyclopedia, Fifth Edition, Volume A 16, pages 156-158.

The invention also relates to a composition according to the first aspect obtainable by the method according to the invention.

The method preferably is a method for preparing a composition according to the first or the second aspect of the invention. Consequently, it is also preferred that the composition according to the first or according to the second aspect of the invention is obtainable by this method for the preparation of a composition comprising a structured oil phase.

*Use according to the invention*

In a fourth aspect, the invention also relates to use of a synergistic combination of hardstock fat and a fibrous preparation of delaminated cell wall material as defined hereinbefore. The examples and preferences with regard to the cell wall material, the fibrous preparation, the oil phase, the liquid oil, the hardstock fat and any of the other components of the composition according to the invention also apply with regard to this use according to the invention.

Thus, the invention also provides use of a synergistic combination of hardstock fat and a fibrous preparation of delaminated cell wall material, wherein the cell wall material is sourced from plant tissue, and wherein said fibrous preparation is a dried preparation of delaminated plant cell wall material retaining the openness of said material in the aqueous delamination medium.

**EXAMPLES**

The invention is illustrated by means of the following non-limiting examples.

**Characterization methods**

*Moisture content*

Moisture content is calculated from the weight loss measured after heating samples to 100 °C for 16 hours (in vacuum).

*BET analysis*

The BET-based specific surface area ($S_{BET}$) was deduced from $N_2$ (nitrogen) adsorption and desorption isotherms using the BET (Brunauer, Emmet and Teller) theory [see e.g. S.J. Gregg, K.S.W. Sing, Adsorption, Surface area and Porosity, 2nd ed. Academic Press, London, 1982]. Prior to the adsorption measurements fibre samples were degassed in vacuum at 100°C for 16 hours. The sample cell holding the outgassed sample was evacuated and isotherms were recorded at a temperature of -196 °C (77 K) using a Micromeritics Tristar 3000 gas sorption analyzer. Portions of nitrogen gas were dosed into the sample cell and were partly adsorbed on the surface, eventually getting into equilibrium with the gas phase. In this way adsorption and desorption points could be recorded at different pressures and the adsorption and desorption isotherm could be constructed. Adsorbed nitrogen generally first forms a monolayer on the sample surface while further increase in pressure results in the formation of multilayers. In the region where monolayers and multilayers were formed, the $S_{BET}$ was determined according to the BET theory. Adsorption points in the relative pressure range between 0.05 and 0.25 were typically used.

*MAP- sample preparation*

The Microfibril Availability Parameter is a measure for the level of activation or defibrillation of activated plant cell wall material in aqueous medium. The MAP is based on the well-known $R_2$ relaxation rate, determined by NMR.

For each sample, 1.2 grams of the dry fibrous preparation was dispersed in 148.8 grams of Millipore water to yield a suspension with a concentration of 0.80 wt% of cell wall material. Dispersion was carried out using a Silverson mixer (3000 rpm, 2 minutes, fine Emulsor screen with round holes of 2mm diameter). The pH was adjusted with 10 wt% citric acid solution to pH 3.3 $\pm$ 0.1. An aliquot of the sample was then transferred to an NMR measurement tube (10 mm diameter, filling height 1 cm). Reference samples for background correction are prepared as follows.

An aliquot of the resulting concentration- and pH-standardised sample was transferred directly to an 18 cm flat bottom NMR tube of 10 mm diameter at a filling height of 1 cm. In order to do a background correction, another aliquot was centrifuged (Eppendorf Centrifuge 5416) at a relative centrifugation force of 15000 for 10 min. in a 2 ml Eppendorf cup, from which the top layer without fibre (matrix) was subsequently transferred to another 18 cm flat bottom NMR tube at a filling height of 1 cm, which we refer to as a matrix reference sample. Both samples and matrix reference samples were incubated and equilibrated at 20 °C for 10 min. prior to the measurement.

*MAP ($R_2$) - measurements*

CPMG relaxation decay data were collected for each sample and for each matrix reference sample. A Bruker MQ20 Minispec was deployed operating at a resonance frequency for protons of 20MHz, equipped with a variable temperature probehead stabilised at 20 °C. Measurements were performed using a CPMG (Carr Purcell Mayboom Gill) T2 relaxation pulse sequence to observe the relaxation decay at 20°C (See Effects of diffusion on free precession in nuclear magnetic resonance experiments, Carr, H.Y., Purcell, E.M., Physical Review, Volume 94, Issue 3, 1954, Pages 630-638 / Modified spin-echo method for measuring nuclear relaxation times, Meiboom, S., Gill, D., Review of Scientific Instruments, Volume 29, Issue 8, 1958, Pages 688-691). Data were collected with the 180° pulse spacing set to 200$\mu$s, a recycle delay time of 30 sec., a 180°-pulse length of 5$\mu$s (microseconds) and using 14.7k 180°-pulses. The sequence deploys a phase cycle and complex mode detection. Prior to measurement, the suitability of the NMR system for these measurements (in terms of field homogeneity etc.) was checked by verifying that the T2* of pure water was > 2ms. The sample temperature was kept constant at 20 °C throughout each measurement.

*MAP ($R_2$) - Data analysis*

Data were processed with Matlab using a singular value decomposition to phase correct the quadrature data (see: "Towards rapid and unique curve resolution of low-field NMR relaxation data: trilinear SLICING versus two-dimensional curve fitting", Pedersen, H.T., Bro, R., Engelsen, S.B., Journal of Magnetic Resonance. 08/2002; 157(1), Pages 141-155. DOI: 10.1006/jmre.2002.2570). The resulting, phase-corrected data were Inverse Laplace Transformed into a $T_2$ distribution curve using the Matlab non-negative least square constraints function lsqnonneg (Lawson, C.L. and R.J. Hanson, Solving Least Squares Problems, Prentice-Hall, 1974, Chapter 23, p. 161) with boundaries set for $T_2$, requiring $T_2$ to be in the range of 0.01 to 10 seconds and with the regularisation parameter lambda set to 0.2.

For every sample, the data were treated as follows to obtain the MAP: In the $T_2$ distribution curve for a particular sample, the peak corresponding to the water protons of which $T_2$ is averaged by exchange between the bulk water phase and the surface of the dispersed and activated cell wall material was identified. It is believed that the exchange (and resulting averaging) is due to diffusion and chemical exchange between bulk and cellulose surface sites. In the present case, the peaks of the bulk water phase were easily distinguished, as they were the peaks with the highest intensity. The peak corresponding to the bulk water phase in the matrix reference sample was similarly identified.

The average $T_2$ value was determined by calculating the intensity-weighted average of the peak.

$R_2$ is defined as the inverse of this average $T_2$, i.e. $R_2 = 1/T_2$ and is expressed in Hz. The microfibril availability parameter MAP for a given sample is calculated as the difference between $R_2$ of the sample and $R_2$ of the matrix reference sample:

$$\text{MAP} = R_2(\text{sample}) - R_2(\text{matrix reference})$$

Thus, MAP is a measure for the bulk water interaction with the available microfibril surface (K.R. Brownstein, C.E. Tarr, Journal of Magnetic Resonance (1969) Volume 26, Issue 1, April 1977, Pages 17-24).

*Determination of particle size (fibrous preparation)*

The particle size distributions of the fibrous preparations were analysed by a wet sieving method. A sample of dry fibrous preparation was dispersed in sunflower oil (fully refined and winterised, ex Unilever Rotterdam) at a concentration of 0.1 wt% by gentle stirring. The dispersion was passed through a set of 5 steal sieves (ex Retsch, Germany), with apertures of 710 $\mu$m, 500 $\mu$m, 355 $\mu$m, 200 $\mu$m and 125 $\mu$m, respectively, starting with the sieve of the largest aperture.

**Fibrous preparations of Cell Wall Material**

Fibrous preparations of cell wall material were prepared from citrus fibre (Herbacel AQ Plus ex Herbafood).

**Comparative Example A**

Comparative Example A is the Herbacel citrus fibre (raw material) as obtained from the supplier.

**Example 1**

*Fibre activation*

Citrus fibres were dispersed in Millipore water at a concentration of 2 wt% and pre-activated using a high shear mixer (Silverson, 4100 rpm, 10 min, fine emulsor screen). The resulting pre-activated fibres were transferred to a microfluidizer (model M-110P, Microfluidics Inc, Z-shaped chamber) and homogenised at 1200 bar (1 pass).

*Freezing of fibre suspension*

Liquid nitrogen-freezing (flash freezing): ca 1 kg of the suspension of activated fibres was added drop-wise to ca. 10 litres of liquid nitrogen (contained in a polystyrene box) using a 50 ml syringe. Frozen fibre pieces were removed from the liquid nitrogen and transferred to a freeze dryer.

*Drying of fibre suspensions*

Freeze drying: the frozen fibre suspension was freeze-dried using a Zirbus Sublimator 3x4x5 freeze dryer (Zirbus Technology GmbH, Germany) with a programmable shelf temperature. Shelves were cooled to -30 °C before samples were placed in the freeze dryer The following time-temperature profile was used: 395 minutes at -30 °C, 30 minutes at -20°C, 30 minutes at -10 °C, 30 minutes at 0 °C, 30 minutes at 10 °C, 30 minutes at 30 °C and 1830 minutes at 40 °C. The condenser temperature was set to - 75 °C. Freeze-drying was carried out at a pressure of 0.15 mbar. Alternatively, a Labconco Freezone (6 Litre) Freeze Dry System (model: 7934031; Labconco, US) was used. In this case the temperature of the shelf was not actively controlled. The condenser temperature was -80 °C and the pressure was 0.016 mbar. Drying continued for ca. 5 days.

Thus, drying was continued until the sample weight did not decrease anymore.

The freeze-dried material was ground to a powder using an electronic coffee grinder (De'Longhi KG49) to yield the fibrous preparation of the invention.

*Characteristics of the dry preparations*

Moisture contents, specific surface areas ($S_{BET}$) and the microfibril availability parameter MAP are summarized in Table 2.

**Table 2**

| Example | Moisture (%) | $S_{BET}$ ($m^2.g^{-1}$) | MAP (Hz) |
|---------|-------------|-----------|----------|
| Ex. A   | 8.4         | 0.9       | 0.97     |
| Ex. 1   | 0.4         | 27.9      | 1.42     |

*Particle size*

The analysis of a sample of Example 1 by the wet-sieving method is summarised in Table 3.

**Table 3**

| Sieve of aperture size | observation |
|------------------------|-------------|
| 710 $\mu$m | Virtually all particles pass |
| 500 $\mu$m | About 10 wt% of particles remain on this sieve |
| 355 $\mu$m | About 40 wt% of particles remains on this sieve |
| 200 $\mu$m | About 40 wt% of particles remains on this sieve |
| 125 $\mu$m | About 10 wt-% of particles remains on this sieve |
| Pan | Clear oil without visible particles |

Thus, at least about 70 wt% of the particles of Example 1 have a size of between 200$\mu$m and 500$\mu$m.

EP 3 364 767 B1

**Examples 2 to 4 and B to P: Structured oil compositions**

*Materials*

Hardstock fat: erES48 ex Unimills B.V., The Netherlands. erES48 is an enzymatically interesterified mixture of 65% multi fractionated palm oil stearin (with an iodine value of 14) and a 35% palm kernel oil.
Liquid oil: fully refined and winterized sunflower (SF) oil (*ex* Unilever Rotterdam).

*Preparation*

Examples 2, 3, and 4 and Comparative Examples B to P were prepared as described below, using the amounts of hardstock fat, sunflower oil, and citrus fibre material (obtained from Comparative Example A or Example 1) as summarised in Table 4.

*Examples 2, 3, 4 and Comparative Examples H, J, K, L:*

Hardstock and sunflower oil were mixed at a 1:9 ratio and heated in a microwave oven to ca. 80 °C. The citrus fibre or the fibrous preparation of citrus fibre were manually dispersed into the hot (oil + hardstock) mixture. 80 gram of the hot mixture was transferred to a double-walled, stirred vessel connected to a low-temperature cryostat bath (bath temperature is 5 °C). The stirring device consisted of a stirring blade with a helical shape and a scraping vane; the vane scraped along the surface of the vessel to remove crystalline fat (see Figure 1). The mixture was stirred at 100 rpm for 5 minutes; after 5 minutes the temperature of the (oil+hardstock+fiber) mixture had decreased to ca. 12 °C. The mixture was taken out and transferred to a plastic container. The plastic container was stored in a fridge at 5 °C.

*Comparative Examples B - G:*

Sunflower oil was heated in a microwave oven to ca. 80 °C. Citrus fibre or the fibrous preparation of citrus fibre was manually dispersed into the hot oil. 80 gram of the hot mixture was transferred to the stirred vessel and stirred at 100 rpm for 5 minutes (as above). The mixture was taken out and transferred to a plastic container. The plastic container was stored in a fridge at 5 °C.

*Comparative Examples L, M, N, P:*

Hardstock and sunflower oil were mixed at an appropriate ratio and heated in a microwave oven to ca. 80 °C. 80 gram of the hot mixture was transferred to the stirred vessel and stirred at 100 rpm for 5 minutes (as above). The mixture was taken out and transferred to a plastic container. The plastic container was stored in a fridge at 5 °C.

**Table 4: structured oil samples (wt% based on total weight)**

| Example | SF Oil wt% | Hardstock wt% | CEx. A[*1] wt% | Ex. 1[*2] wt% |
|---------|-----------|---------------|---------------|---------------|
| B | 99.5 | 0 | 0.5 | 0 |
| C | 99.0 | 0 | 1.0 | 0 |
| D | 98.5 | 0 | 1.5 | 0 |
| | | | | |
| E | 99.5 | 0 | 0 | 0.5 |
| F | 99.0 | 0 | 0 | 1.0 |
| G | 98.5 | 0 | 0 | 1.5 |
| | | | | |
| H | 89.55 | 9.95 | 0.5 | 0 |
| J | 89.1 | 9.9 | 1.0 | 0 |
| K | 88.65 | 9.85 | 1.5 | 0 |
| | | | | |

14

(continued)

| Example | SF Oil wt% | Hardstock wt% | CEx. A*1 wt% | Ex. 1*2 wt% |
|---|---|---|---|---|
| 2 | 89.55 | 9.95 | 0 | 0.5 |
| 3 | 89.1 | 9.9 | 0 | 1.0 |
| 4 | 88.65 | 9.85 | 0 | 1.5 |
| | | | | |
| L | 90.0 | 10.0 | 0 | 0 |
| M | 87.5 | 12.5 | 0 | 0 |
| N | 85.0 | 15.0 | 0 | 0 |
| P | 80.0 | 20.0 | 0 | 0 |
| *1: Citrus Fibre of Comparative Example A | | | | |
| *2: Fibrous preparation of Example 1 | | | | |

*Characterization of structured oil samples*

Texture analysis was performed using a Brookfield Texture Analyzer CT3 equipped with a cylindrical probe (probe diameter = 0.25 inch/6.35 mm; probe speed = 2 mm/s; maximum deformation = 25 mm; trigger value = 3 gram). The following parameters were recorded: peak load (maximum measured load during the test), final load (load at maximum deformation) and work (area under the force-deformation curve). The samples (80 gram) were contained in round plastic jars (diameter = 52 mm, volume ca. 100 ml). Measurements were performed after storing the samples for 21 days at 5 °C; measurement temperature was 5 °C. The results of the texture analysis tests are summarized in Table5.

**Table 5: results of texture analysis tests.**

| Example | Peak load (g) | Final load (g) | Work (mJ) |
|---|---|---|---|
| B | < 3g | < 3g | - |
| C | < 3g | < 3g | - |
| D | < 3g | < 3g | - |
| | | | |
| E | < 3g | < 3g | - |
| F | 5.3 ±0.3 | 3.3 ± 1.6 | 0.6 ± 0.10 |
| G | 14.7 ± 0.9 | 13.9 ± 2.4 | 2.2 ± 0.20 |
| | | | |
| H | 7.3 ± 0.4 | 4.6 ± 2.0 | 1.2 ± 0.09 |
| J | 6.5 ± 0.4 | 6.0 ± 0.3 | 1.0 ± 0.06 |
| K | 7.7 ± 0.4 | 5.3 ± 1.4 | 1.3 ± 0.05 |
| | | | |
| 2 | 23.7 ± 0.5 | 23.5 ± 0.4 | 4.1 ± 0.12 |
| 3 | 64.2 ± 2.2 | 63.1 ± 2.9 | 12.1 ± 0.40 |
| 4 | 75.1 ± 9.6 | 72.6 ± 8.6 | 13.9 ± 1.51 |
| | | | |
| L | 6.9 ± 0.5 | 5.8 ± 0.3 | 1.1 ± 0.12 |
| M | 16.3 ± 3.6 | 15.4 ± 4.4 | 2.6 ± 0.40 |
| N | 39.4 ± 17.9 | 37.7 ± 17.9 | 5.5 ± 2.18 |

(continued)

| Example | Peak load (g) | Final load (g) | Work (mJ) |
|---|---|---|---|
| P | 85.8 ± 19.2 | 85 ± 19.7 | 14.3 ± 2.34 |

Comparative Examples B, C, and D demonstrate that the untreated citrus fibre material does not provide detectable structuring at any of the tested concentration.

Comparative Examples E, F, and G show that the fibrous preparation of Example 1 is only capable of providing modest hardness at the relatively low concentrations of these examples.

Comparative Examples L, M, N, and P are reference examples demonstrating the traditional structuring effect of hardstock fat.

Comparative Examples H, J, and K demonstrate that combined structuring with hardstock fat (in a 1:9 ratio to liquid oil) and increasing amounts of untreated citrus fibre material does not lead to an increase in structuring compared to structuring of the oil with 10 wt% of hardstock alone (cf Comparative Example L).

In stark contrast, a comparison of Examples 2, 3, and 4 to Comparative Example L surprisingly shows that there is a marked increase in the observed hardness even at the lowest concentration of fibrous material. The combined structuring of hardstock (10% with respect to total fats and oils) and 0.5 wt% of the fibrous material synergistically yields a degree of structuring comparable to the structuring obtained with between 12.5 and 15 wt% of hardstock (cf Comparative Examples M and N, respectively).

Example 4 shows excellent hardness, which demonstrates that combined structuring with 1.5 wt% of fibrous material and 9.85 wt% of hardstock synergistically yields a degree of structuring for wich (in the absence of such fibrous material) an amount of almost 20 wt% of hardstock would be required.

## Claims

1. Composition comprising a structured oil phase, wherein the oil phase comprises

    a. liquid oil
    b. hardstock fat; and
    c. a fibrous preparation of delaminated cell wall material dispersed in said oil phase, wherein the cell wall material is sourced from plant tissue;

   and wherein said fibrous preparation has a specific surface area corresponding to an $S_{BET}$ of at least 5 m$^2$/g.

2. Composition according to claim 1 wherein the oil phase comprises a synergistic combination of the hardstock fat and the fibrous preparation.

3. Composition according to claim 1 or 2, wherein the composition has a shear storage modulus G' of at least 100 Pa

4. Composition according to any one of claims 1 to 3, wherein the oil phase comprises from **1 to 20** wt-% of said hardstock fat and from **0.1** to **10** wt-% of the fibrous preparation with regard to the weight of the oil phase.

5. Composition according to any one of claims 1 to 4, wherein the hard stock fat and the fibrous preparation are present in a ratio by weight of fibrous preparation to hardstock fat of between 1 to 40 and 1 to 1.

6. Composition according to any one of claims 1 to 5, wherein the fibrous preparation has a specific surface area corresponding to an $S_{BET}$ of at least 15 m$^2$/g.

7. Composition according to any one of claims 1 to 6, wherein the liquid oil includes an edible liquid oil, a liquid paraffin, a liquid silicone oil or a combination thereof.

8. Composition according to claim any one of the preceding claims, wherein the composition is an edible composition.

9. Composition according to any one of claims 1 to 8, wherein the cell wall material is citrus fibre.

10. Composition according to any one of claims 1 to 9 wherein the fibrous preparation is in particulate form and wherein upon sieving a dispersion containing between 0.05 and 0.2 wt-% of the fibrous preparation in a hydrophobic liquid, preferably a triglyceride oil, more preferably sunflower oil, at least 70 wt% of the fibrous preparation passes a sieve with apertures of 500 $\mu$m and not more than 30 wt% of the fibrous preparation passes a sieve with apertures of 125 $\mu$m.

11. Method for preparing a composition comprising a structured oil phase, wherein the method comprises the steps of

a. providing cell wall material, wherein the cell wall material is sourced from plant tissue;
b. providing at least part of the oil phase;
c. providing the hardstock fat;
d. delaminating said cell wall material in an aqueous medium;
e. drying the dispersed delaminated cell wall material so as to obtain a dried fibrous preparation of delaminated cell wall material with an $S_{BET}$ of at least 5 m$^2$/g; and
f. preparing a molten mixture of the hardstock fat and the at least first part of the liquid oil;
g. dispersing the dried preparation in said molten mixture;
h. crystallising the hardstock fat in the mixture comprising the dispersed fibrous preparation.

12. Composition according to any one of claims 1 to 10, wherein the composition is obtainable by the method according to claim 11.

13. Use of a synergistic combination of hardstock fat and a fibrous preparation of delaminated cell wall material to structure the oil phase of a composition comprising an oil phase,

• wherein the cell wall material is sourced from plant tissue, and
• wherein said fibrous preparation has a specific surface area corresponding to an $S_{BET}$ of at least 5 m$^2$/g.


**Patentansprüche**

1. Zusammensetzung, umfassend eine strukturierte Ölphase, wobei die Ölphase umfasst:

a. flüssiges Öl,
b. Hardstockfett und
c. eine faserige Zubereitung von delaminiertem Zellwandmaterial, das in der Ölphase dispergiert ist, wobei das Zellwandmaterial von Pflanzengewebe stammt;

und wobei die faserige Zubereitung eine spezifische Oberfläche aufweist, die einem $S_{BET}$ von mindestens 5 m$^2$/g entspricht.

2. Zusammensetzung nach Anspruch 1, wobei die Ölphase eine synergistische Kombination des Hardstockfetts und der faserigen Zubereitung umfasst.

3. Zusammensetzung nach Anspruch 1 oder 2, wobei die Zusammensetzung ein Scherspeichermodul G' von mindestens 100 Pa aufweist.

4. Zusammensetzung nach irgendeinem der Ansprüche 1 bis 3, wobei die Ölphase von 1 bis 20 Gew.-% Hardstockfett und von 0,1 bis 10 Gew.-% der faserigen Zubereitung, bezogen auf das Gewicht der Ölphase, umfasst.

5. Zusammensetzung nach irgendeinem der Ansprüche 1 bis 4, wobei das Hardstockfett und die faserige Zubereitung in einem Gewichtsverhältnis von faseriger Zubereitung zu Hardstockfett zwischen 1 bis 40 und 1 bis 1 vorliegen.

6. Zusammensetzung nach irgendeinem der Ansprüche 1 bis 5, wobei die faserige Zubereitung eine spezifische Oberfläche aufweist, die einem $S_{BET}$ von mindestens 15 m$^2$/g entspricht.

7. Zusammensetzung nach irgendeinem der Ansprüche 1 bis 6, wobei das flüssige Öl ein essbares flüssiges Öl, ein flüssiges Paraffin, ein flüssiges Siliconöl oder eine Kombination davon enthält.

8. Zusammensetzung nach irgendeinem der vorhergehenden Ansprüche, wobei die Zusammensetzung eine essbare Zusammensetzung ist.

**9.** Zusammensetzung nach irgendeinem der Ansprüche 1 bis 8, wobei das Zellwandmaterial Citrusfaser darstellt.

**10.** Zusammensetzung nach irgendeinem der Ansprüche 1 bis 9, wobei die faserige Zubereitung teilchenförmig vorliegt und wobei beim Sieben einer Dispersion, die zwischen 0,05 und 0,2 Gew.-% faserige Zubereitung in einer hydrophoben Flüssigkeit, vorzugsweise in einem Triglyceridöl, bevorzugter in Sonnenblumenöl, enthält, mindestens 70 Gew.-% der faserigen Zubereitung ein Sieb mit Öffnungen von 500 $\mu$m und nicht mehr als 30 Gew.-% der faserigen Zubereitung ein Sieb mit Öffnungen von 125 $\mu$m passiert.

**11.** Verfahren zur Herstellung einer Zusammensetzung, die eine strukturierte Ölphase enthält, wobei das Verfahren die Schritte umfasst:

a. Bereitstellen von Zellwandmaterial, wobei das Zellwandmaterial von Pflanzengewebe stammt;
b. Bereitstellen mindestens eines Teils der Ölphase;
c. Bereitstellen des Hardstockfetts;
d. Delaminieren des Zellwandmaterials in einem wässrigen Medium;
e. Trocknen des dispergierten delaminierten Zellwandmaterials, um eine getrocknete faserige Zubereitung von delaminiertem Zellwandmaterial mit einem $S_{BET}$ von mindestens 5 m$^2$/g zu erhalten; und
f. Zubereiten einer geschmolzenen Mischung des Hardstockfetts und des mindestens ersten Teils des flüssigen Öls;
g. Dispergieren der getrockneten Zubereitung in der geschmolzenen Mischung;
h. Kristallisieren des Hardstockfetts in der Mischung, die die dispergierte faserige Zubereitung umfasst.

**12.** Zusammensetzung nach irgendeinem der Ansprüche 1 bis 10, wobei die Zusammensetzung durch das Verfahren nach Anspruch 11 erhältlich ist.

**13.** Verwendung einer synergistischen Kombination von Hardstockfett und einer faserigen Zubereitung von delaminiertem Zellwandmaterial, um die Ölphase einer Zusammensetzung, die eine Ölphase umfasst, zu strukturieren,

• wobei das Zellwandmaterial von Pflanzengewebe stammt und
• wobei die faserige Zubereitung eine spezifische Oberfläche aufweist, die einem $S_{BET}$ von mindestens 5 m$^2$/g entspricht.

**Revendications**

**1.** Composition comprenant une phase d'huile structurée, dans laquelle la phase d'huile comprend

a. de l'huile liquide
b. de la graisse solide ; et
c. une préparation fibreuse de matériau de paroi cellulaire déstratifié dispersé dans ladite phase d'huile, dans laquelle le matériau de paroi cellulaire provient de tissu de plante ;

et dans laquelle ladite préparation fibreuse présente une surface spécifique correspondant à un $S_{BET}$ d'au moins 5 m$^2$/g.

**2.** Composition selon la revendication 1, dans laquelle la phase d'huile comprend une combinaison synergique de la graisse solide et de la préparation fibreuse.

**3.** Composition selon la revendication 1 ou 2, dans laquelle la composition présente un module de stockage au cisaillement G' d'au moins 100 Pa.

**4.** Composition selon l'une quelconque des revendications 1 à 3, dans laquelle la phase d'huile comprend de 1 à 20 % en masse de ladite graisse solide et de 0,1 à 10 % en masse de la préparation fibreuse par rapport à la masse de la phase d'huile.

**5.** Composition selon l'une quelconque des revendications 1 à 4, dans laquelle la graisse solide dure et la préparation fibreuse sont présentes dans un rapport en masse de préparation fibreuse à graisse solide de (1 à 40) à (1 à 1).

**6.** Composition selon l'une quelconque des revendications 1 à 5, dans laquelle la préparation fibreuse présente une surface spécifique correspondant à un $S_{BET}$ d'au moins 15 m$^2$/g.

**7.** Composition selon l'une quelconque des revendications 1 à 6, dans laquelle l'huile liquide comprend une huile liquide comestible, une paraffine liquide, une huile de silicone liquide ou une combinaison de celles-ci.

**8.** Composition selon l'une quelconque des revendications précédentes, dans laquelle la composition est une composition comestible.

**9.** Composition selon l'une quelconque des revendications 1 à 8, dans laquelle le matériau de paroi cellulaire est une fibre d'agrumes.

**10.** Composition selon l'une quelconque des revendications 1 à 9, dans laquelle la préparation fibreuse est dans une forme particulaire et dans laquelle lors du tamisage une dispersion contenant de 0,05 à 0,2 % en masse de la préparation fibreuse dans un liquide hydrophobe, de préférence une huile de triglycéride, encore mieux de l'huile de tournesol, au moins 70 % en masse de la préparation fibreuse passent un tamis avec des ouvertures de 500 μm et au plus 30 % en masse de la préparation fibreuse passent un tamis avec des ouvertures de 125 μm.

**11.** Procédé de préparation d'une composition comprenant une phase d'huile structurée, dans lequel le procédé comprend les étapes de

a. fourniture d'un matériau de paroi cellulaire, dans lequel le matériau de paroi cellulaire provient de tissu de plante ;
b. fourniture d'au moins une partie de la phase d'huile ;
c. fourniture de la graisse solide ;
d. déstratification dudit matériau de paroi cellulaire dans un milieu aqueux ;
e. séchage du matériau de paroi cellulaire déstratifié dispersé afin d'obtenir une préparation fibreuse séchée de matériau de paroi cellulaire déstratifié avec un $S_{BET}$ d'au moins 5 m$^2$/g ; et
f. préparation d'un mélange fondu de la graisse solide et de la au moins première partie de l'huile liquide ;
g. dispersion de la préparation séchée dans ledit mélange fondu ;
h. cristallisation de la graisse solide dans le mélange comprenant la préparation fibreuse dispersée.

**12.** Composition selon l'une quelconque des revendications 1 à 10, dans laquelle la composition peut être obtenue par le procédé selon la revendication 11.

**13.** Utilisation d'une combinaison synergique de graisse solide et d'une préparation fibreuse de matériau de paroi cellulaire déstratifié pour structurer la phase d'huile d'une composition comprenant une phase d'huile,

- dans laquelle ledit matériau de paroi cellulaire provient de tissu de plante, et
- dans laquelle ladite préparation fibreuse présente une surface spécifique correspondant à un $S_{BET}$ d'au moins 5 m$^2$/g.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110281015 A1
- US 20130202771 A1
- US 4378381 A
- EP 0533147 A1
- WO 2015128155 A1
- WO 2004044285 A2
- WO 2008062057 A1
- US 2008193590 A1
- WO 0218486 A
- WO 2014095323 A1
- US 20120090192 A

**Non-patent literature cited in the description**

- **CHINGA-CARRASCO et al.** *Nanoscale Research Letters,* 2011, vol. 6, 417
- Ullmans Encyclopedia. vol. A 16, 156-158
- **S.J. GREGG ; K.S.W. SING.** Adsorption, Surface area and Porosity. Academic Press, 1982
- **CARR, H.Y. ; PURCELL, E.M.** *Physical Review,* 1954, vol. 94 (3), 630-638
- **MEIBOOM, S. ; GILL, D.** *Review of Scientific Instruments,* 1958, vol. 29 (8), 688-691
- **PEDERSEN, H.T. ; BRO, R. ; ENGELSEN, S.B.** Towards rapid and unique curve resolution of low-field NMR relaxation data: trilinear SLICING versus two-dimensional curve fitting. *Journal of Magnetic Resonance,* August 2002, vol. 157 (1), 141-155
- **LAWSON, C.L. ; R.J. HANSON.** Solving Least Squares Problems. Prentice-Hall, 1974, 161
- **K.R. BROWNSTEIN ; C.E. TARR.** *Journal of Magnetic Resonance,* April 1977, vol. 26 (1), 17-24